# EUROPÄISCHE PATENTSCHRIFT

(11) **EP 3 123 642 B1**
(45) Veröffentlichungstag und Bekanntmachung des Hinweises auf die Patenterteilung: **04.12.2019**
(21) Anmeldenummer: 15705220.0
(22) Anmeldetag: 02.02.2015
(51) Int. Cl.: H04H 40/18, H04B 7/06, H04L 12/26, H04L 27/227

(54) **VERFAHREN UND VORRICHTUNG ZUM AUFBEREITEN EINES RADIO-DATEN-SIGNALS FÜR EINEN RUNDFUNKEMPFÄNGER**
METHOD AND APPARATUS FOR CONDITIONING A RADIO DATA SIGNAL FOR A BROADCAST RADIO RECEIVER
PROCÉDÉ ET DISPOSITIF DE PRÉPARATION D'UN SIGNAL RADIOÉLECTRIQUE DE DONNÉES POUR UN RÉCEPTEUR RADIOÉLECTRIQUE

(30) Priorität: 25.03.2014 DE 102014205528
(43) Veröffentlichungstag der Anmeldung: 01.02.2017
(73) Patentinhaber: Robert Bosch GmbH, 70442 Stuttgart (DE)
(72) Erfinder: NYENHUIS, Detlev, 31079 Sibbesse (DE)
(86) Internationale Anmeldenummer: PCT/EP2015/052052
(87) Internationale Veröffentlichungsnummer: WO 2015/144344

(56) Entgegenhaltungen:
- EP-A1- 0 627 833
- EP-A2- 0 803 999
- JP-A- 2006 304 092
- US-A- 5 507 024
- SCHNEEGASS L: "UNIVERSELLES DIGITALES ABSTIMM-UND ANZEIGENSYSTEM MIT RDS", RFE RADIO FERNSEHEN ELEKTRONIK, HUSS MEDIEN GMBH, BERLIN, DE, Bd. 40, Nr. 5, 1. Januar 1991 (1991-01-01) , Seiten 257-264, XP000227069, ISSN: 1436-1574

## Beschreibung

### Stand der Technik

Die vorliegende Erfindung bezieht sich auf ein Verfahren zum Aufbereiten eines Radio-Daten-Signals für einen Rundfunkempfänger, auf eine entsprechende Vorrichtung zum Aufbereiten eines Radio-Daten-Signals für einen Rundfunkempfänger sowie auf ein entsprechendes Computerprogrammprodukt.

Das RDS-System (RDS: Radio-Data-System, oder Radio-Daten-System) gibt es seit Ende der 80iger Jahre. Es hat über Jahre hinweg stetige Verbesserungen im Bereich der RDS-Demodulation und RDS-Decodierung im Empfänger gegeben. Die Dienste des RDS sind bestimmte Arten von Daten, die gesendet und entsprechend der Datenart von den Radioempfangsgeräten ausgewertet werden können. RDS bietet neben den verbreitet genutzten Funktionen für Programmkennung, Verkehrsfunk und Alternativfrequenzen weitere Möglichkeiten für Zusatzinformationen/Services. Das RDS-System ist auf 57-kHz aufmoduliert, wobei der Träger unterdrückt wird. Ein digitales zwei-Phasen-Shift-Keying-Verfahren (2-PSK) wird als Modulationsverfahren eingesetzt.

Die Offenlegungsschrift EP 0627834 A1 beschreibt eine Schaltungsanordnung für einen Demodulator eines Radio-Daten-Signals in einem Rundfunkempfänger.

Die Druckschrift EP 0 803 999 A2 offenbart ein Demodulatorgerät für Daten, die in Unterträgern transportiert wurden.

Die Druckschrift EP 0 627 833 A1 offenbart einen Demodulator für Radio-DatenSignale.

Die Druckschrift US 5 507 024 A offenbart einen FM-Datensystem-Radioempfänger.

### Offenbarung der Erfindung

Vor diesem Hintergrund wird mit dem hier vorgestellten Ansatz ein Verfahren zum Aufbereiten eines Radio-Daten-Signals für einen Rundfunkempfänger, weiterhin eine Vorrichtung zum Aufbereiten eines Radio-Daten-Signals für einen Rundfunkempfänger, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Für jedes Bit des digitalen Radio-Daten-Signals kann eine Glaubwürdigkeit oder eine Sicherheit (Qualität) bestimmt werden, dass das in einem Empfänger empfangene Bit dem von einem Sender ausgesendeten Bit entspricht. Die Information über die Glaubwürdigkeit kann neben den Prüfbits in den über das Radio-Daten-Signal übertragenen Prüfbits eine Verbesserung der RDS-Empfindlichkeit beziehungsweise der RDS-Datenerkennung auf Bit-Ebene ermöglichen.

Ein Verfahren zum Aufbereiten eines Radio-Daten-Signals für einen Rundfunkempfänger umfasst die folgenden Schritte:
Einlesen des Radio-Daten-Signals und eines Radio-Daten-Taktsignals;
Integrieren eines von dem Radio-Daten-Signal abhängigen Signals, um einen Integralwertverlauf zu bestimmen; Decodieren einer Radio-Daten-Signal-Information aus dem Integralwertverlauf unter Verwendung des Radio-Daten-Taktsignals Ermitteln einer eine Radio-Daten-Signal-Qualität repräsentierenden Radio-Daten-Signal-Qualitäts-Information unter Verwendung des Radio-Daten-Signals, wobei die Radio-Daten-Signal-Qualitäts-Information eine Glaubwürdigkeit (Qualität) der decodierten Radio-Daten-Signal-Information repräsentiert;
Bereitstellen der Radio-Daten-Signal-Information und der Radio-Daten-Signal-Qualitäts-Information, um ein aufbereitetes Radio-Daten-Signal bereitzustellen; und
im Schritt des Integrierens der Integralwert unter Verwendung einer Multiplikation des Radio-Daten-Signals mit einem Sinus des Radio-Daten-Signals bestimmt wird und der integralwert über die Dauer einer Periode des Radio-Daten-Taktsignals bestimmt und nach einer Periode des Radio-Daten-Taktsignals auf null gesetzt wird.

Unter einem Radio-Daten-Signal kann ein Radio-Daten-System-Signal oder ein RDS-Signal verstanden werden. Das Radio-Daten-Signal kann über UKW (Ultra-Kurz-Welle) übertragen werden und auf ein FM- (frequenzmoduliertes)Signal aufmoduliert sein. Das Radio-Daten-Taktsignal kann unter Verwendung des FMSignals oder unter Verwendung des Radio-Daten-Signals gewonnen werden. Das Radio-Daten-Signal kann als ein MPX-Signal (Multiplex Signal) in digitaler Form vorliegen. Das Radio-Daten-Signal kann durch einen A/D Wandler (Analog-Digital Wandler) digitalisiert werden.

So können die beiden Signale in einem Speicher oder einem Register abgelegt sein und ausgelesen werden. Im Schritt des Integrierens können Abtastwerte des abhängigen Signals oder eines Hilfssignals aufsummiert werden. Im Schritt des Integrierens können Abtastwerte über eine Zeit oder ein Zeitintervall aufsummiert werden. Im Schritt des Decodierens kann unter der Radio-Daten-Signal-Information ein Radio-Daten-Signal-Bit oder ein RDS-Bit verstanden werden. Die Radio-Daten-Signal-Information kann als ein binärer Wert oder als ein binäres Datenwort vorliegen. Bei einem 2-PSK Verfahren werden im Datentakt (bei RDS 1187,5 Hz) Bit's, also "Einsen" und "Nullen" übertragen. Unter der Radio-Daten-Signal-Qualitäts-Information kann eine Qualitäts-Information verstanden werden. Die Radio-Daten-Signal-Qualitäts-Information kann als ein binärer Wert oder als ein binäres Datenwort vorliegen. Mit der Glaubwürdigkeit der decodierten Radio-Daten-Signal-Information kann eine Wahrscheinlichkeit beschrieben werden, dass eine zugeordnete Radio-Daten-Signal-Information korrekt empfangen wurde, oder mit welcher Wahrscheinlichkeit eine übertragene Radio-Daten-Signal-Information korrekt oder falsch empfangen wurde. Wenn die Radio-Daten-Signal-Information zusammen mit der Radio-Daten-Signal-Qualitäts-Information bereitgestellt wird, kann für ein oder eine Mehrzahl von Bits oder Informationsteilen der Radio-Daten-Signal-Information eine Glaubwürdigkeit zugeordnet werden, und diese Information kann für eine verbesserte Fehlerkorrektur genutzt werden oder als Zuverlässigkeitsindiz beziehungsweise Glaubwürdigkeit der empfangenen Daten genutzt werden. Vorteilhaft kann somit die Übertragung oder das Aufbereiten des Radio-Daten-Signals verbessert werden.

Ferner kann im Schritt des Ermittelns die Radio-Daten-Signal-Qualitäts-Information eine gute Qualität repräsentieren, wenn der Integralwert über das Radio-Daten-Signal unterhalb eines vorabdefinierten Schwellwerts liegt. Dabei kann die RDS-Qualitäts-Information eine schlechte Qualität repräsentieren, wenn der Integralwert über das Radio-Daten-Signal oberhalb des vorabdefinierten Schwellwerts liegt. Dabei kann eine gute Qualität eine hohe Glaubwürdigkeit repräsentieren. Insbesondere kann die Radio-Daten-Signal-Qualitäts-Information den Wert Null aufweisen, wenn die Radio-Daten-Signal-Qualitäts-Information eine gute Qualität repräsentiert. Insbesondere kann die Radio-Daten-Signal-Qualitäts-Information einen von Null verschiedenen Wert aufweisen, wenn die Radio-Daten-Signal-Qualitäts-Information eine schlechte Qualität repräsentiert. Insbesondere kann die Radio-Daten-Signal-Qualitäts-Information den Wert Eins (also eine "1") aufweisen, wenn die Radio-Daten-Signal-Qualitäts-Information eine schlechte Qualität repräsentiert. Ein Bit der Radio-Daten-Signal-Qualitäts-Information kann einem Bit der Radio-Daten-Signal-Information zugeordnet sein. So kann die Radio-Daten-Signal-Qualitäts-Information bitweise der Radio-Daten-Signal-Information zugeordnet sein.

Im Schritt des Decodierens können die Phasenlage des Radio-Daten-Signals in eine erste Phase mit einem Phasenwinkel von 0° und eine zweite Phase mit einem Phasenwinkel von 180° unterteilt werden. Dabei können die erste Phase und die zweite Phase durch ein Anwenden einer Signums-Funktion auf das Radio-Daten-Taktsignal unterschieden werden, da es sich um eine trägerlose Übertragung handelt.

Günstig ist es auch, wenn im Schritt des Decodierens die Radio-Daten-Signal-Information unter Verwendung einer Sinus-Komponente des Radio-Daten-Signals und ergänzend oder alternativ einer Cosinus-Komponente des Radio-Daten-Signals und ergänzend oder alternativ unter Verwendung des Radio-Daten-Signals decodiert wird.

Ferner kann das Radio-Daten-Taktsignal durch Anwenden einer Costas-Schleife auf das Radio-Daten-Signal (auf der Taktebene 1187.5 Hz) gewonnen werden.

Unter einer Costas-Schleife kann eine Costas-Loop verstanden werden. Unter Verwendung der Costas-Schleife kann eine Phasenlage des Radio-Daten-Signals oder das Radio-Daten-Taktsignal aus dem Radio-Daten-Signal oder einem Bitstrom des Radio-Daten-Signals rekonstruiert werden.

Im Schritt des Einlesens kann ein Multiplex-Signal eingelesen werden. Unter einem Multiplex-Signal kann ein digitalisiertes MPX-Signal verstanden werden. Dabei kann ein 19-kHz-Pilotton unter Verwendung des Multiplex-Signals unter Verwendung einer 19-kHz-Phasenregelschleife rekonstruiert werden. Ein 57-kHz-Radio-Daten-Trägersignal kann ansprechend auf den 19-kHz-Pilotton erzeugt werden. Das 57-kHz-Radio-Daten-Trägersignal kann mit dem Multiplex-Signal gemischt werden. Das mit dem Multiplex-Signal gemischte 57-kHz-Radio-Daten-Trägersignal kann in ein Basisband umgesetzt werden, um das RDS-Signal bereitzustellen.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät oder eine Schaltung verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller oder DSP neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer DSP oder Mikrocontroller (µC) oder einer Vorrichtung ausgeführt wird.

Der hier vorgestellte Ansatz wird nachstehend anhand der beigefügten Zeichnungen beispielhaft näher erläutert. Es zeigen:
- Fig. 1: ein Blockschaltbild eines Demodulators für ein Radio-Daten-Signal gemäß einem Ausführungsbeispiel der vorliegenden Erfindung;
- Fig. 2: ein Blockschaltbild eines Teils eines Demodulators für ein Radio-Daten-Signal gemäß einem Ausführungsbeispiel der vorliegenden Erfindung;
- Fig. 3: ein Blockschaltbild eines Demodulators für ein Radio-Daten-Signal mit detaillierter Costas-Schleife gemäß einem Ausführungsbeispiel der vorliegenden Erfindung;
- Fig. 4: ein Ablaufdiagramm eines Verfahrens zum Aufbereiten eines Radio-Daten-Signals für einen Rundfunkempfänger gemäß einem Ausführungsbeispiel der vorliegenden Erfindung;
- Fig. 5: einen Signalverlauf eines Radio-Daten-Signals und Hilfssignalen bei der Decodierung gemäß einem Ausführungsbeispiel der vorliegenden Erfindung;
- Fig. 6: einen Signalverlauf eines Radio-Daten-Signals und Hilfssignalen bei der Decodierung gemäß einem Ausführungsbeispiel der vorliegenden Erfindung;
- Fig. 7: ein Blockschaltbild eines Teils des Blockschaltbildes des Demodulators gemäß einem Ausführungsbeispiel der vorliegenden Erfindung;
- Fig. 8: ein Blockschaltbild eines Teils des Blockschaltbildes des Demodulators gemäß einem Ausführungsbeispiel der vorliegenden Erfindung;
- Fig. 9: ein Blockschaltbild eines Teils des Blockschaltbildes des Demodulators gemäß einem Ausführungsbeispiel der vorliegenden Erfindung;
- Fig. 10: ein Blockschaltbild eines Teils des Blockschaltbildes des Demodulators gemäß einem Ausführungsbeispiel der vorliegenden Erfindung; und
- Fig. 11: ein Blockschaltbild eines Teils des Blockschaltbildes des Demodulators gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

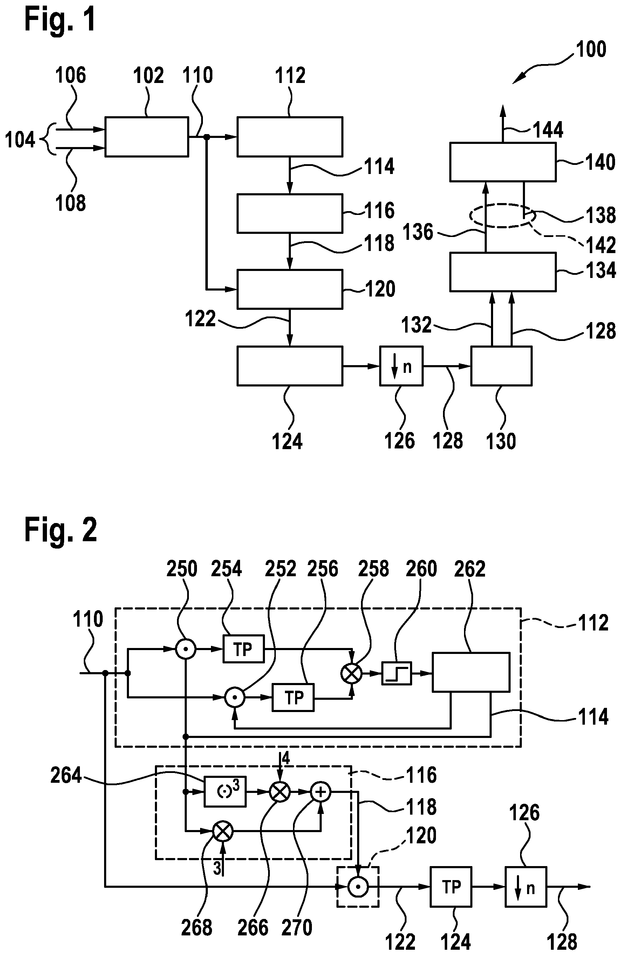

Fig. 1 zeigt ein Blockschaltbild eines Demodulators 100 für ein Radio-Daten-Signal gemäß einem Ausführungsbeispiel der vorliegenden Erfindung. Einem FM-Demodulator 102 wird ein Zwischenfrequenzsignal 104 als ein I-Signal 106 und ein Q-Signal 108, welches zu dem I-Signal 106 ein Inphase- und Quadratursignal ist, zugeführt. Der FM-Demodulator 102 stellt ein Multiplexsignal 110 beziehungsweise Multiplex-Signal 110 oder MPX-Signal 110 bereit. Das Multiplexsignal 110 enthält zusätzlich zur Audio-Information je nach empfangenem Sender, ein Radio-Daten-Signal oder beide Signale. Das RDS-Signal liegt spektral auf 57KHz. Zur Übertragung des Radio-Daten-Signals erfolgt eine Phasenumtastung eines unterdrückten Hilfsträgers mit der üblicherweise ausgestrahlten Frequenz von 1187,5 Hz. Ein Block 112 repräsentiert eine 19-kHz-Phasenregelschleife oder 19-kHz-PLL. Am Eingang der 19-kHz-Phasenregelschleife liegt das Multiplexsignal 110 an und am Ausgang wird ein 19-kHz-Pilotton 114 bereitgestellt. Der 19-kHz-Pilotton 114 liegt an einem Eingang des Blocks 116 an. Der Block 116 repräsentiert eine 57-KHz-Sinusschwingung-Erzeugung unter Verwendung des 19-kHz-Pilottons 114. Die 57-kHz entsprechen der dreifachen Frequenz des 19-kHz-Pilottons 114. Die von dem Block 116 bereitgestellte 57-kHz-Sinusschwingung 118, auch einfach als 57-kHz-Schwingung 118 bezeichnet, wird einem Block 120 bereitgestellt, der ausgebildet ist, die 57-kHz-Sinusschwingung 118 mit dem vom FM-Demodulator 102 bereitgestellten Multiplexersignal 110 zu mischen und als Hilfssignal 122 bereitzustellen. Das Hilfssignal 122 wird an einen Block 124, der einen Tiefpass oder einen Tiefpassfilter repräsentiert, übergeben und dort gefiltert, anschließend dem Block 126 zugeführt. Im Block 126 erfolgt eine Unterabtastung oder einer Abtastratenreduktion um einen Faktor n. Das von dem Block 126 bereitgestellte RDS-Signal 128, auch als Radio-Daten-Signal 128 bezeichnet, wird an eine Costas-Schleife 130 übergeben, die ein Radio-Daten-Taktsignal 132 und das durchgeschleifte RDS-Signal 128 an den folgenden Block 134 übergibt. Das Radio-Daten-Taktsignal 132 wird auch als RDS-Takt oder RDS-Taktsignal bezeichnet. Der Block 134 repräsentiert eine Schaltung, die unter Verwendung des RDS-Signals 128 und dem Radio-Daten-Taktsignal 132 eine Radio-Daten-Signal-Information 136 sowie eine Radio-Daten-Signal-Qualitäts-Information 138 bestimmt, die an einen RDS-Dekoder 140 als aufbereitetes Radio-Daten-Signal 142 übergeben werden, wobei der RDS-Dekoder 140 hieraus RDS-Block-Daten 144 gewinnt.

Das in Fig. 1 gezeigte Ausführungsbeispiel zeigt einen RDS-Demodulator mit einer verbesserten RDS-Empfindlichkeit. In mobilen Empfangssituationen schwankt die Empfangsfeldstärke sehr stark und das RDS-Signal 128 verschwindet oft, das heißt, der RDS-Empfang bricht ab. Um einen stabilen RDS-Empfang zu gewährleisten, ist es wichtig, die RDS-Empfindlichkeit immer weiter zu steigern. Heute sind viele Anwendungen auf einen stabilen RDS-Empfang angewiesen, so beispielsweise das TMC-Signal, welches Verkehrsnachrichten überträgt, die in einer Navigationseinheit zur Berechnung der Route benötigt werden. Informationsverlust kann nachhaltig zu Fehlern führen. Auch die Aktualität und Stabilität der FM-Senderliste ist stark abhängig von der RDS-Empfindlichkeit.

Die Verbesserung der RDS-Empfindlichkeit bringt also viele Vorteile und soll durch die Verwendung von neuen Algorithmen dargestellt werden.

Dabei ist ein Aspekt des vorgestellten Ausführungsbeispiels eine Verbesserung der RDS-Empfindlichkeit. Dabei wird die 57-KHz-Schwingung (PLL) 118 aus dem 19-KHz-Pilotton (PLL) 114 erzeugt. Im Sender wird der Stereopilotton mit 19 KHz erzeugt. Die 57 KHz für das RDS-Signal wird auch im Sender aus der 19-KHz-Pilottonschwingung gewonnen. Im Empfänger kann umgekehrt auch aus der 19-KHz-Pilottonfrequenz 114 die 57 KHz für das RDS-Signal 118 rückgewonnen werden. Der Pilotton 114 wird mit ca. 7,5 KHz Hub (ca 10% der Gesamtleistung) vom Sender abgestrahlt und ist im Empfänger gut über eine 19KHz-PLL 112 rekonstruierbar. Der übertragene Pilot ist auch bei Störungen wesentlich stabiler als das ebenfalls übertragene 57 kHz RDS-Signal mit typ. 1,5-2,5 kHz Hub.

Diese 19-kHz-Schwingung 114 ist jetzt in Frequenz und Phase synchronisiert mit der 19 kHz im Sender und aus ihr wird dann die 57KHzfür das RDS-Signal 118 erzeugt. Das MPX-Signal 110 wird mit dieser 57-KHz-Schwingung 118 gemischt und das RDS-Signal ins Basisband (auf die Frequenz Null) umgesetzt. Eine nachfolgende Costas-Loop 130 übernimmt dann die RDS-Sinus-Generierung auf 1187.5 Hz. Die Costas-Loop 130 weist eine verbesserte RDS-Datenerkennung (auf Bit-Ebene) auf. Ferner ist die RDS-Qualitätsberechnung, die die RDS-Empfindlichkeit weiter verbessert, optimiert.

Der Pilotton wird vom Sender mit der Amplitude A abgestrahlt, d. h. *A*·sin(19*kHz* + *phi*) und wird dann winkelmoduliert. Im Empfänger wird über eine PLL-Schaltung die 19-KHz-Schwingung zurückgewonnen und der Phasenfehler phi ausgeregelt. So wird über eine PLL-Schaltung sin(19*kHz* + *phi*) erzeugt. Aus diesem 19KHz-Sinus wird durch Anwenden der Gleichung 4·sin(19*kHz* + *phi*)³ + 3·sin(19*kHz* + *phi*) = sin(57*kHz* + 3·*phi*) die 57KHz Schwingung gewonnen, mit der das MPX-Signal 110 gemischt wird. So wird das RDS-Signal 128 im Basisband erzeugt. Ferner werden die 19kHz vom Sender mit ca. 10% der Gesamtleistung, das heißt mit 7.5kHz Hub abgestrahlt, im Vergleich zu den 1.5-2.5 kHz, die für das RDS-Signal auf 57KHz zur Verfügung sind. Weiter hat der Pilotton keine direkten Nachbarfrequenzen, das heißt zwischen 15kHz und 23kHz liegt nur der Pilotton. So lässt sich mit dem Pilotton eine deutlich bessere (stabile) 57kHz-Schwingung erzeugen und dadurch die RDS-Empfindlichkeit deutlich verbessern. Damit kann man auch beispielsweise weit entfernte RDS-Sender empfangen. Vorteilhaft ergibt sich ein besserer TMC-Empfang, der sich für die Navigation nutzen lässt.

Vorteilhaft wird keine direkte 57KHz-PLL für die Erzeugung der 57KHz Schwingung im Empfänger genutzt, sondern die 19KHz-PLL für die Erzeugung der 57KHz Schwingung genutzt.

Fig. 2 zeigt ein Blockschaltbild eines Teils eines Demodulators für ein Radio-Daten-Signal 128 gemäß einem Ausführungsbeispiel der vorliegenden Erfindung. Bei dem in Fig. 2 gezeigten Blockschaltbild kann es sich um einen Ausschnitt des in Fig. 1 gezeigten und beschriebenen Blockschaltbilds eines Demodulators 100 für ein Radio-Daten-Signal handeln. Ein Multiplex-Signal 110 wird einer 19-kHz-Phasenregelschleife 112 zugeführt. Ein Eingang eines ersten Multiplizierer250 sowie ein Eingang eines zweiten Multiplizierer252 sind mit dem Multiplex-Signal 110 verbunden. Der erste Multiplizierer250 ist mit einem ersten Tiefpassfilter 254 verbunden, der zweite Multiplizierer252 ist mit einem zweiten Tiefpassfilter 256 verbunden. Der erste Tiefpassfilter 254 und der zweite Tiefpassfilter 256 sind mit einem Multiplizierer 258 verbunden, dessen Ausgangssignal mit einer Signumbildung 260 verbunden ist. Ein Ausgang der Signumbildung 260 ist mit einem steuerbaren Oszillator 262 verbunden. Der steuerbare Oszillator 262 kann auch als Sinus- und/oder Cosinus-Generator bezeichnet werden. Ein Ausgang des steuerbaren Oszillators 262 ist mit dem Eingang des Blocks 116 der 57-kHz-Erzeugung aus 19-kHz-Pilotton 114 verbunden sowie mit dem ersten Multiplizierer 250. Ein weiterer Ausgang des steuerbaren Oszillators 262 ist mit dem zweiten Multiplizierer 252 verbunden. Mathematisch kann der 19-kHz-Pilotton 114 als sin(19*kHz* + *phi*) beschrieben werden.

Der Eingang des Blocks 116 ist mit einem Block 264 verbunden. Der Block 264 bestimmt die 3-te Potenz eines anliegenden Signals. Der Ausgang des Blocks 264 ist mit einem Multiplizierer 266 verbunden, der ausgebildet ist, ein anliegendes Signal mit einem Faktor vier zu multiplizieren. Der Eingang des Blocks 116 ist weiterhin mit einem Multiplizierer 268 verbunden, der ausgebildet ist, ein anliegendes Signal mit einem Faktor drei zu multiplizieren. Der Ausgang des Multiplizierers 266 sowie der Ausgang des Multiplizierers 268 sind einem Addierer 270 verbunden, der ausgebildet ist, zwei anliegende Signale zu addieren. Ein Ausgang des Addierers 270 ist als Ausgang des Blocks 116 als 57-Sinusschwingung 118 mit dem Block 120 verbunden, wobei der Block 120 der ausgebildet ist, die 57-kHz-Schwingung 118 mit dem Multiplexersignal 110 zu mischen und als Hilfssignal 122 bereitzustellen. Der Block 120 ist mit einem Tiefpassfilter 124 verbunden. Der Tiefpassfilter 124 ist mit einem Block 126 verbunden. Im Block 126 erfolgt eine Unterabtastung oder einer Abtastratenreduktion um einen Faktor n. Der Block 126 stellt ein RDS-Signal 128 bereit.

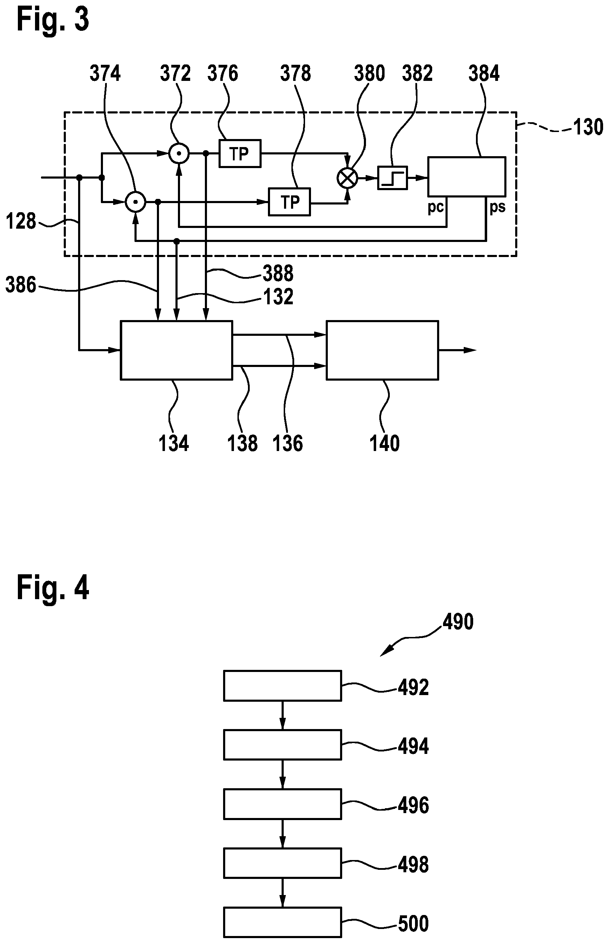

Fig. 3 zeigt ein Blockschaltbild eines Teils eines Demodulators für ein Radio-Daten-Signal 128 mit detaillierter Costas-Schleife 130 gemäß einem Ausführungsbeispiel der vorliegenden Erfindung. Bei dem in Fig. 2 gezeigten Blockschaltbild kann es sich um einen Ausschnitt des in Fig. 1 gezeigten und beschriebenen Blockschaltbilds eines Demodulators 100 für ein Radio-Daten-Signal handeln. Dabei wird der Block 130, der eine Costas-Schleife repräsentiert, detaillierter ausgeführt. Ein RDS-Signal 128 wird der Costas-Schleife 130 zugeführt. Ein Eingang eines ersten Multiplizierers 372 sowie ein Eingang eines zweiten Multiplizierers 374 sind mit dem RDS-Signal 128 verbunden. Der erste Multiplizierer 372 ist mit einem ersten Tiefpassfilter 376 verbunden, der zweite Multiplizierer 374 ist mit einem zweiten Tiefpassfilter 378 verbunden. Der erste Tiefpassfilter 376 und der zweite Tiefpassfilter 378 sind mit einem Multiplizierer 380 verbunden, dessen Ausgangssignal mit einer Signumbildung 382 verbunden ist. Ein Ausgang der Signumbildung 382 ist mit einem steuerbaren Oszillator 384 verbunden. Der steuerbare Oszillator 384 kann auch als Sinus- und/oder Cosinus-Generator bezeichnet werden. Ein erster Ausgang des steuerbaren Oszillators 374, an dem das Radio-Daten-Taktsignal 132 anliegt, ist mit dem Eingang des Blocks 134 verbunden sowie mit dem zweiten Multiplizierer 374. Ein zweiter Ausgang des steuerbaren Oszillators 384 ist mit dem ersten Multiplizierer 372 verbunden. Der Ausgang des zweiten Multiplizierers 374 wird als Sinus-Komponente 386 dem Block 134 bereitgestellt. Der Ausgang des ersten Multiplizierers 372 wird als Cosinus-Komponente 388 dem Block 134 bereitgestellt. Weiterhin ist der Block 134 mit dem an der Costas-Schleife 130 vorbeigeschleiftem RDS-Signal 128 verbunden. Der Block 134 stellt an einem ersten Ausgang Radio-Daten-Signal-Information 136 sowie an einem zweiten Ausgang eine Radio-Daten-Signal-Qualitäts-Information 138 bereit. Der Block 134 repräsentiert ein Verfahren, das unter Verwendung des RDS-Signals 128, dem Radio-Daten-Taktsignal 132, der Sinus-Komponente 386 sowie der Cosinus-Komponente 388 eine Radio-Daten-Signal-Information 136 sowie eine Radio-Daten-Signal-Qualitäts-Information 138 bestimmt. Der Block 134 ist mit dem Block 140 verbunden.

Die Costas-Schleife 130 besteht in einem Ausführungsbeispiel als Kernkomponenten aus einem numerisch gesteuerten Oszillator 384, einer Signumbildung 382, mehreren Multiplizierern 372, 374, 380 und zwei Tiefpassfiltern 376, 378. Bei korrekt eingestellter Phasenlage des numerisch gesteuerten Oszillators 384 ist das Steuersignal über den toggelt das Signal aus 382 zwischen +1 und -1. Kommt es zu einer Taktabweichung, wird diese durch die Regelschleife (Costas Loop 130) nachgeregelt.

Fig. 4 zeigt ein Ablaufdiagramm eines Verfahrens 490 zum Aufbereiten eines Radio-Daten-Signals für einen Rundfunkempfänger gemäß einem Ausführungsbeispiel der vorliegenden Erfindung. Das Verfahren 490 zum Aufbereiten eines Radio-Daten-Signals für einen Rundfunkempfänger umfasst einen Schritt 492 des Einlesens des Radio-Daten-Signals und eines Radio-Daten-Taktsignals, einen Schritt 494 des Integrierens eines von dem Radio-Daten-Signal abhängigen Signals, um einen Integralwertverlauf zu bestimmen, einen Schritt 496 des Decodierens einer Radio-Daten-Signal-Information aus dem Integralwertverlauf unter Verwendung des Radio-Daten-Taktsignals einen Schritt 498 des Ermittelns einer eine Radio-Daten-Signal-Qualität repräsentierenden Radio-Daten-Signal-Qualitäts-Information unter Verwendung des Radio-Daten-Signals sowie einen Schritt 500 des Bereitstellens der Radio-Daten-Signal-Information und der Radio-Daten-Signal-Qualitäts-Information, um ein aufbereitetes Radio-Daten-Signal bereitzustellen. Dabei repräsentiert die Radio-Daten-Signal-Qualitäts-Information eine Glaubwürdigkeit der decodierten Radio-Daten-Signal-Information.

Im Schritt 494 des Integrierens wird der Integralwert über eine Periode des Radio-Daten-Signal-Takts bestimmt. Dabei wird der Integralwert unter Verwendung einer Multiplikation des Radio-Daten-Signals mit einem Sinus des Radio-Daten-Signals bestimmt.

In einem Ausführungsbeispiel repräsentiert im Schritt 498 des Ermittelns die Radio-Daten-Signal-Qualitäts-Information eine gute Qualität, wenn der Integralwert über das Radio-Daten-Signal unterhalb eines vorabdefinierten Schwellwerts liegt. Dabei repräsentiert die RDS-Qualitäts-Information eine schlechte Qualität, wenn der Integralwert über das Radio-Daten-Signal oberhalb des vorabdefinierten Schwellwerts liegt. Dabei repräsentiert eine gute Qualität eine hohe Glaubwürdigkeit. In einem Ausführungsbeispiel weist die Radio-Daten-Signal-Qualitäts-Information den Wert Null auf, wenn die Radio-Daten-Signal-Qualitäts-Information eine gute Qualität repräsentiert. Die Radio-Daten-Signal-Qualitäts-Information weist eine logische 1 auf, wenn sie eine schlechte Qualität repräsentiert.

In einem Ausführungsbeispiel wird im Schritt 496 des Decodierens die Phasenlage des Radio-Daten-Signals in eine erste Phase mit einem Phasenwinkel von 0° und eine zweite Phase mit einem Phasenwinkel von 180° unterteilt. Dabei werden die erste Phase und die zweite Phase durch ein Anwenden einer Signums-Funktion auf das Radio-Daten-Taktsignal unterschieden.

In einem Ausführungsbeispiel wird im Schritt 496 des Decodierens die Radio-Daten-Signal-Information unter Verwendung einer Sinus-Komponente des Radio-Daten-Signals und ergänzend oder alternativ einer Cosinus-Komponente des Radio-Daten-Signals und ergänzend oder alternativ unter Verwendung des Radio-Daten-Signals decodiert.

In einem Ausführungsbeispiel wird im Schritt 492 das Radio-Daten-Taktsignal durch Anwenden einer Costas-Schleife auf das Radio-Daten-Signal gewonnen.

In einem Ausführungsbeispiel wird im Schritt 492 ein Multiplex-Signal eingelesen, wobei ein 19-kHz-Pilotton unter Verwendung des Multiplex-Signals unter Verwendung einer 19-kHz-Phasenregelschleife rekonstruiert wird, wobei ein 57-kHz-Radio-Daten-Trägersignal ansprechend auf den 19-kHz-Pilotton erzeugt wird, wobei das 57-kHz-Radio-Daten-Trägersignal mit dem Multiplex-Signal gemischt wird und in ein Basisband umgesetzt wird, um das RDS-Signal bereitzustellen.

In einem Ausführungsbeispiel wird im Schritt 492 des Einlesens das Radio-Daten-Signal vor dem Bereitstellen des Radio-Daten-Signals unter Verwendung eines Tiefpassfilters gefiltert. In einem Teilschritt erfolgt eine Unterabtastung mit einem vorabdefinierten Abtastfaktor.

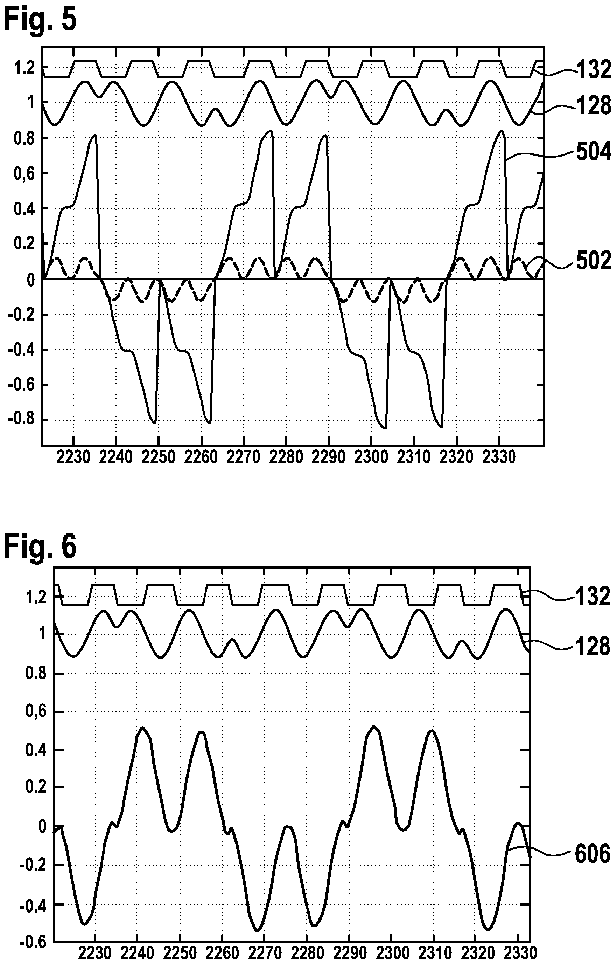

Fig. 5 zeigt einen Signalverlauf eines Radio-Daten-Signals und Hilfssignalen bei der Decodierung gemäß einem Ausführungsbeispiel der vorliegenden Erfindung. In einem kartesischen Koordinatensystem sind vier Signalverläufe 132, 128, 504, 502 dargestellt. Die Abszisse repräsentiert eine Zeitachse. Die Ordinate repräsentiert eine Amplitude der Signalverläufe. Der Signalverlauf 132 zeigt ein Radio-Daten-Taktsignal 132. Der Signalverlauf 128 zeigt ein Radio-Daten-Signal 128. Der Signalverlauf 502 zeigt ein Signal entsprechend ± sin(*ωt*)·sin(*ωt*). Der Signalverlauf 504 zeigt ein Signal entsprechend einem Integral über das Radio-Daten-Signal 128 multipliziert mit einem Sinus, wobei der Integralwert nach einem RDS-Takt auf Null gesetzt wird. Das heißt es erfolgt eine Integration über eine Periode des Radio-Daten-Taktsignals 132.

Das Radio-Daten-Taktsignal 132 entspricht näherungsweise einem Rechtecksignal und ist das Signum vom RDS-Sinus (1187.5Hz). Dabei bewegt sich das Radio-Daten-Taktsignal 132 um einen Wert von 1,2 auf der Ordinate des kartesischen Koordinatensystems (das Radio-Daten-Taktsignal 132 ist nur wegen der Optik verschoben zur Darstellbarkeit in einem Plot, und hat technisch keine Relevanz). Der Signalverlauf 128 schwingt um einen Wert auf der Ordinate (wie bei dem Radio-Daten-Taktsignal 132 ist dies nur eine Skalierung zur leichteren Lesbarkeit). Eine Halbwelle des Signalverlaufs 502 entspricht einer halben Periode des Radio-Daten-Taktsignals 132.

Eine Auswertung des Signalverlaufs 504 erfolgt immer am Ende eines RDS-Takts 132. In dem gezeigten Ausführungsbeispiel ergibt sich ein Muster 101010.

Fig. 6 zeigt einen Signalverlauf eines Radio-Daten-Signals 128 und von Hilfssignalen bei der Decodierung gemäß einem Ausführungsbeispiel der vorliegenden Erfindung. In einem kartesischen Koordinatensystem sind drei Signalverläufe 132, 128, 606 dargestellt. Die Abszisse repräsentiert eine Zeitachse. Die Signalverläufe sind aus optischen Gründen auf der Ordinate verschoben. Der Signalverlauf 132 zeigt ein Radio-Daten-Taktsignal 132. Der Signalverlauf 128 zeigt ein Radio-Daten-Signal 128. Der Signalverlauf 606 zeigt ein Signal einer Summation eines Qualitätssignals. Der Signalverlauf 128, das heißt das Radio-Daten-Signal 128, sowie der Signalverlauf 132, das heißt das Radio-Daten-Taktsignal 132, entsprechen der Darstellung in Fig. 5. Das Signal 606 stellt eine Summation über die Zeit eines eine Qualität repräsentierenden Signals dar.

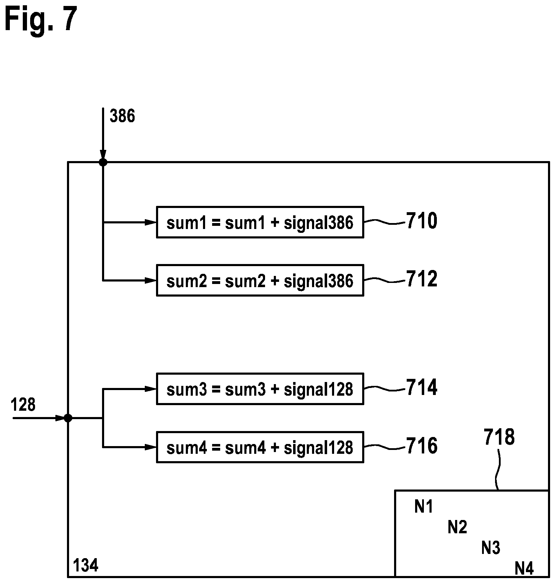

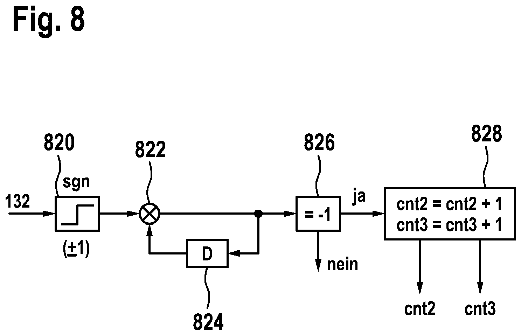

Fig. 7 zeigt ein Blockschaltbild eines Teils des Blocks 134 gemäß einem Ausführungsbeispiel der vorliegenden Erfindung. Bei dem Blockschaltbild kann es sich um ein Ablaufdiagramm handeln, welches als ein Computerprogrammprodukt oder als eine Schaltung umgesetzt wird. Bei dem Block 134 kann es sich um ein Ausführungsbeispiel des in Fig. 1 oder Fig. 3 gezeigten Blocks 134 handeln. Dem Block 134 werden ein Radio-Daten-Signal 128 und eine Sinus-Komponente 386 zugeführt. Die Sinus-Komponente 386 wird den Blöcken 710 und 712 zugeführt, das Radio-Daten-Signal 128 wird den Blöcken 714 und 716 zugeführt. Im Block 710 wird eine Variable sum1 um den Wert der Sinuskomponente 386 erhöht, das heißt, es wird eine Summe aus der Variablen sum1 und der Sinuskomponente 386 gebildet und als neuer Wert für die Variable sum1 gespeichert. Im Block 712 wird eine Variable sum2 um den Wert der Sinuskomponente 386 erhöht, das heißt, es wird eine Summe aus der Variablen sum2 und der Sinuskomponente 386 gebildet und als neuer Wert für die Variable sum2 gespeichert. Im Block 714 wird eine Variable sum3 um den Wert des Radio-Daten-Signals 128 erhöht, das heißt, es wird eine Summe aus der Variablen sum3 und dem Radio-Daten-Signal 128 gebildet und als neuer Wert für die Variable sum3 gespeichert. Im Block 716 wird eine Variable sum4 um den Wert des Radio-Daten-Signals 128 erhöht, das heißt, es wird eine Summe aus der Variablen sum4 und dem Radio-Daten-Signal 128 gebildet und als neuer Wert für die Variable sum4 gespeichert. Ein Block 718, der im Block 134 angeordnet ist, repräsentiert die in den folgenden Figuren Fig. 8 bis Fig. 11 dargestellten Teilsegmente des Blocks 134.

Fig. 8 zeigt ein Blockschaltbild eines Teils des Blocks 134 gemäß einem Ausführungsbeispiel der vorliegenden Erfindung. Bei dem Blockschaltbild kann es sich um ein Ablaufdiagramm handeln, welches als ein Computerprogrammprodukt oder als eine Schaltung umgesetzt wird. Bei dem Block 134 kann es sich um ein Ausführungsbeispiel des in Fig. 1 oder Fig. 3 gezeigten Blocks 134 handeln. Dem Block 134 wird ein Radio-Daten-Taktsignal 132 zugeführt. In einem Block 820 wird auf das Radio-Daten-Taktsignal 132 eine Signumfunktion angewendet. Im darauffolgenden Multiplizierer 822 wird das Ergebnis der Signumfunktion in Block 820 mit einem über einen D-Block 824 zurückgeführten Ergebnis der Multiplikation multipliziert. Das Ergebnis der Multiplikation 822 wird in dem Block 826 auf eine Übereinstimmung mit dem Wert minus Eins ("-1") überprüft und bei einer positiven Übereinstimmung wird in einem darauf folgenden Block 828 wird eine Variable cnt2 um den Wert Eins erhöht, das heißt, es wird eine Summe aus der Variablen cnt2 und dem Wert "+1" gebildet und als neuer Wert für die Variable cnt2 gespeichert. Weiterhin wird bei einer positiven Übereinstimmung in dem Block 828 eine Variable cnt3 um den Wert Eins erhöht, das heißt, es wird eine Summe aus der Variablen cnt3 und dem Wert "+1" gebildet und als neuer Wert für die Variable cnt3 gespeichert.

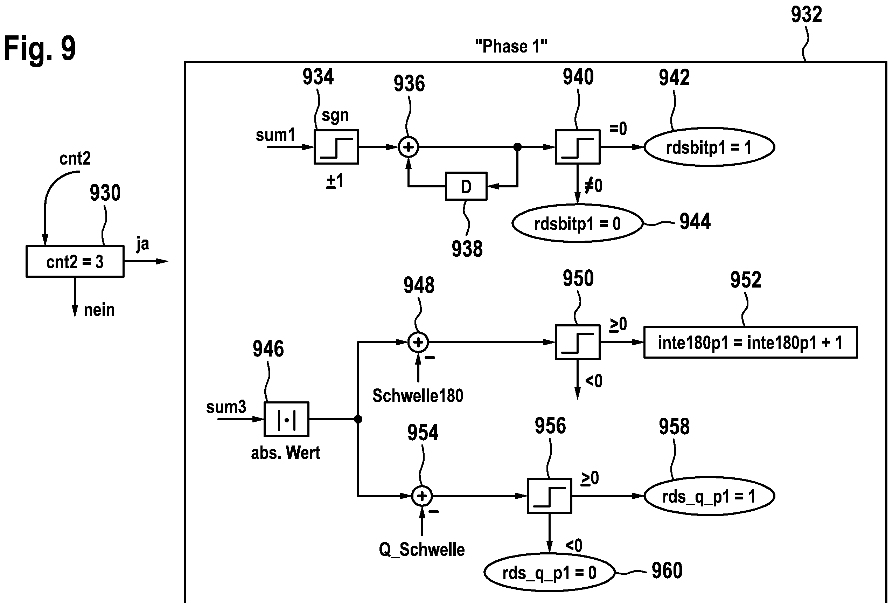

Fig. 9 zeigt ein Blockschaltbild eines Teils des Blocks 134 gemäß einem Ausführungsbeispiel der vorliegenden Erfindung. Bei dem Blockschaltbild kann es sich um ein Ablaufdiagramm handeln, welches als ein Computerprogrammprodukt oder als eine Schaltung umgesetzt wird. Bei dem Block 134 kann es sich um ein Ausführungsbeispiel des in Fig. 1 oder Fig. 3 gezeigten Blocks 134 handeln. Einem Entscheidungsblock 930 wird ein Signal cnt2 oder eine Variable cnt2 zugeführt, wie diese in Fig. 8 im Block 828 definiert wird. Wenn die Variable cnt2 den Wert drei aufweist, wird ein Block 932 ausgeführt. Die Blöcke 934 bis 960 sind Teil des Blocks 932. In einem Block 934 wird eine Signumfunktion auf die im Block 710 definierte Variable sum1 angewandt und das Ergebnis wird im Addierer 936 mit einem über einen D-Block 938 zurückgeführten Ergebnis der des Addierers 936 addiert. Das Ergebnis des Addierers 936 wird einem Block 940 zugeführt, in dem eine Signumfunktion auf das Ergebnis des Addierers 936 angewandt wird und dann ein Vergleich durchgeführt wird. Wenn das Ergebnis des Vergleichs im Block 940 gleich Null ist, wird im Block 942 eine Variable rdsbitp1 auf den Wert 1 gesetzt. Wenn das Ergebnis des Vergleichs im Block 940 ungleich Null ist, wird im Block 944 die Variable rdsbitp1 auf den Wert 0 gesetzt. In einem Block 946 wird ein Absolutwert der Variable sum3 gebildet und das Ergebnis einem Addierer 948 und einem Addierer 954 zugeführt. Im Addierer 948 wird ein Signal oder eine Variable Schwelle180 von dem Absolutwert der Variable sum3 subtrahiert und das Ergebnis des Addierers 948 wird an einen Block 950 geleitet, in dem eine Signumfunktion auf das Ergebnis des Addierers 948 angewandt wird und dann ein Vergleich durchgeführt wird. Wenn das Ergebnis des Vergleichs im Block 950 größer oder gleich Null ist, wird im Block 952 eine Variable inte180p1 inkrementiert, das heißt der Wert um eins erhöht. Im Addierer 954 wird ein Signal oder eine Variable Q_Schwelle von dem Absolutwert der Variable sum3 subtrahiert und das Ergebnis des Addierers 954 wird an einen Block 956 geleitet, in dem eine Signumfunktion auf das Ergebnis des Addierers 954 angewandt wird und dann ein Vergleich durchgeführt wird. Wenn das Ergebnis des Vergleichs im Block 956 größer oder gleich Null ist, wird im Block 958 eine Variable rds_q_p1 auf den Wert 1 gesetzt. Wenn das Ergebnis des Vergleichs im Block 956 kleiner Null ist, wird im Block 960 die Variable rds_q_p1 auf den Wert 0 gesetzt.

Im Anschluss, das heißt nach der Auswertung, werden die Variablen sum1, sum3 auf den Wert Null gesetzt und die Variable cnt2 auf den Wert eins.

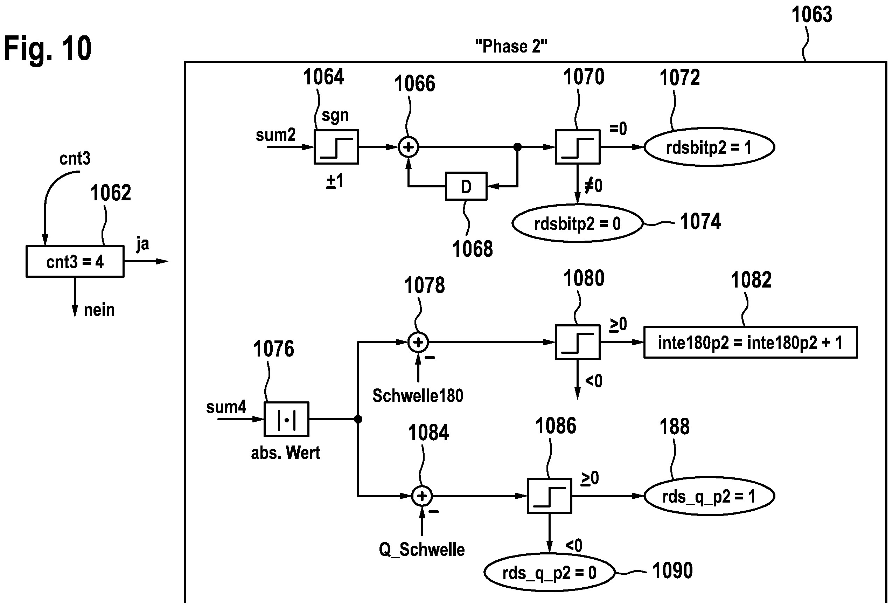

Fig. 10 zeigt ein Blockschaltbild eines Teils des Blocks 134 gemäß einem Ausführungsbeispiel der vorliegenden Erfindung. Bei dem Blockschaltbild kann es sich um ein Ablaufdiagramm handeln, welches als ein Computerprogrammprodukt oder als eine Schaltung umgesetzt wird. Bei dem Block 134 kann es sich um ein Ausführungsbeispiel des in Fig. 1 oder Fig. 3 gezeigten Blocks 134 handeln. Fig. 10 zeigt eine strukturelle Ähnlichkeit zu Fig. 9, wobei im Unterschied zu Fig. 9, bei dem der Block 932 eine erste Phase repräsentiert, in Fig. 10 die zweite Phase verarbeitet wird. Einem Entscheidungsblock 1062 wird ein Signal cnt3 oder eine Variable cnt3 zugeführt, wie diese in Fig. 8 im Block 828 definiert wird. Wenn die Variable cnt3 den Wert vier aufweist, wird ein Block 1063 ausgewertet. Die Blöcke 1064 bis 1090 sind Teil des Blocks 1063. In einem Block 1064 wird eine Signumfunktion auf die im Block 712 definierte Variable sum2 angewandt und das Ergebnis wird im Addierer 1066 mit einem über einen D-Block 1068 zurückgeführten Ergebnis der des Addierers 1066 addiert. Das Ergebnis des Addierers 1066 wird einem Block 1070 zugeführt, in dem eine Signumfunktion auf das Ergebnis des Addierers 1066 angewandt wird und dann ein Vergleich durchgeführt wird. Wenn das Ergebnis des Vergleichs im Block 1070 gleich Null ist, wird im Block 1072 eine Variable rdsbitp2 auf den Wert 1 gesetzt. Wenn das Ergebnis des Vergleichs im Block 1070 ungleich Null ist, wird im Block 1074 die Variable rdsbitp2 auf den Wert 0 gesetzt. In einem Block 1076 wird ein Absolutwert der Variable sum4 gebildet und das Ergebnis einem Addierer 1078 und einem Addierer 1084 zugeführt. Im Addierer 1078 wird ein Signal oder eine Variable Schwelle 180 von dem Absolutwert der Variable sum4 subtrahiert und das Ergebnis des Addierers 1078 wird an einen Block 1080 geleitet, in dem eine Signumfunktion auf das Ergebnis des Addierers 1078 angewandt wird und dann ein Vergleich durchgeführt wird. Wenn das Ergebnis des Vergleichs im Block 1080 größer oder gleich Null ist, wird im Block 1082 eine Variable inte180p2 inkrementiert, das heißt der Wert um eins erhöht. Im Addierer 1084 wird ein Signal oder eine Variable Q_Schwelle von dem Absolutwert der Variable sum4 subtrahiert und das Ergebnis des Addierers 1084 wird an einen Block 1086 geleitet, in dem eine Signumfunktion auf das Ergebnis des Addierers 1084 angewandt wird und dann ein Vergleich durchgeführt wird. Wenn das Ergebnis des Vergleichs im Block 1086 größer oder gleich Null ist, wird im Block 1088 eine Variable rds_q_p2 auf den Wert 1 gesetzt. Wenn das Ergebnis des Vergleichs im Block 1086 kleiner Null ist, wird im Block 1090 die Variable rds_q_p2 auf den Wert 0 gesetzt.

Im Anschluss, das heißt nach der Auswertung, werden die Variablen sum2, sum4 auf Null gesetzt und die Variable cnt3 auf den Wert zwei.

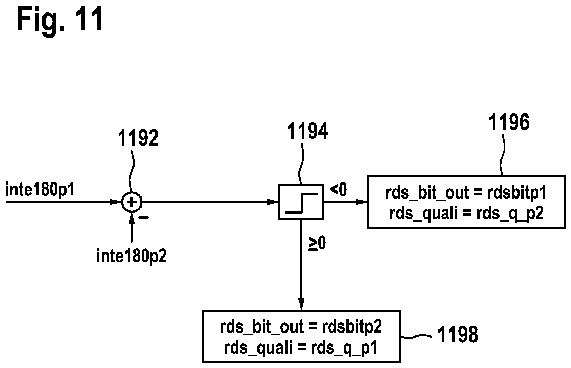

Fig. 11 zeigt ein Blockschaltbild eines Teils des Blocks 134 gemäß einem Ausführungsbeispiel der vorliegenden Erfindung. Bei dem Blockschaltbild kann es sich um ein Ablaufdiagramm handeln, welches als ein Computerprogrammprodukt oder als eine Schaltung umgesetzt wird. Bei dem Block 134 kann es sich um ein Ausführungsbeispiel des in Fig. 1 oder Fig. 3 gezeigten Blocks 134 handeln. Einem Addierer 1192 werden die Signale oder Variablen inte180p1 und inte180p2 zugeführt, wie diese in Fig. 9 respektive Fig. 10 eingeführt und definiert werden. Im Addierer 1192 wird vom Wert der Variablen inte180p1 der Wert der Variablen inte180p2 subtrahiert und das Ergebnis wird an einen Block 1194 geleitet. Im Block 1194 wird ein Vergleich durchgeführt. Wenn das Ergebnis des Vergleichs im Block 1194 kleiner Null ist, wird im Block 1196 einer Variablen rds_bit_out der Wert der Variablen rdsbitp1 zugewiesen und einer Variablen rds_quali der Wert der Variablen rds_q_p2. Wenn das Ergebnis des Vergleichs im Block 1194 größer oder gleich Null ist, wird im Block 1198 der Variablen rds_bit_out der Wert der Variablen rdsbitp2 zugewiesen und der Variablen rds_quali der Wert der Variablen rds_q_p1.

So wird im Block 1194 eine Entscheidung getroffen, welche der beiden Phasen die richtige Phase für die RDS-Daten und die RDS-Qualität darstellt. Je nach Entscheidung wird den Signalen 136 und 138, wie diese in Fig. 1 als als Radio-Daten-Signal-Information 136 für die Variable rds_bit_out und der Radio-Daten-Signal-Qualitäts-Information 138 für die Variable rds_quali definiert sind, der entsprechende Wert zugewiesen.

## Patentansprüche

1. Verfahren (490) zum Aufbereiten eines Radio-Daten-Signals (128) für einen Rundfunkempfänger, wobei das Verfahren (490) die folgenden Schritte aufweist:
Einlesen (492) des Radio-Daten-Signals (128) und eines Radio-Daten-Taktsignals (132);
Integrieren (494) eines von dem Radio-Daten-Signal (128) abhängigen Signals, um einen Integralwertverlauf (504) zu bestimmen;
Decodieren (496) einer Radio-Daten-Signal-Information aus dem Integralwertverlauf (504) unter Verwendung des Radio-Daten-Taktsignals (132);
Ermitteln (498) einer eine Radio-Daten-Signal-Qualität repräsentierenden Radio-Daten-Signal-Qualitäts-Information (138) unter Verwendung des Radio-Daten-Signals (128), wobei die Radio-Daten-Signal-Qualitäts-Information (138) eine Glaubwürdigkeit der decodierten Radio-Daten-Signal-Information repräsentiert; und
Bereitstellen (500) der Radio-Daten-Signal-Information (136) und der Radio-Daten-Signal-Qualitäts-Information (138), um ein aufbereitetes Radio-Daten-Signal (142) bereitzustellen
**dadurch gekennzeichnet, dass**
im Schritt des Integrierens (494) der Integralwert unter Verwendung einer Multiplikation des Radio-Daten-Signals (128) mit einem Sinus des Radio-Daten-Signals (386) bestimmt wird und der Integralwert über die Dauer einer Periode des Radio-Daten-Taktsignals (132) bestimmt und nach einer Periode des Radio-Daten-Taktsignals (132) auf null gesetzt wird.

2. Verfahren (490) gemäß Anspruch 1, bei dem im Schritt des Ermittelns die Radio-Daten-Signal-Qualitäts-Information eine gute Qualität repräsentiert, wenn der Integralwert über das Radio-Daten-Signal (128) unterhalb eines vorabdefinierten Schwellwerts liegt und wobei die Radio-Daten-Signal-Qualitäts-Information (138) eine schlechte Qualität repräsentiert, wenn der Integralwert über das Radio-Daten-Signal (128) oberhalb des vorabdefinierten Schwellwerts liegt, wobei eine gute Qualität eine hohe Glaubwürdigkeit repräsentiert, insbesondere wobei die Radio-Daten-Signal-Qualitäts-Information (138) den Wert Null aufweist, wenn sie eine gute Qualität repräsentiert und die Radio-Daten-Signal-Qualitäts-Information (138) den Wert Eins aufweist, wenn sie eine schlechte Qualität repräsentiert.

3. Verfahren (490) gemäß einem der vorangegangenen Ansprüche, bei dem im Schritt (492) des Einlesens das Radio-Daten-Taktsignal (132) durch Anwenden einer Costas-Schleife auf das Radio-Daten-Signal (128) gewonnen wird.

4. Verfahren (490) gemäß einem der vorangegangenen Ansprüche, bei dem im Schritt (492) des Einlesens ein Multiplex-Signal (110) eingelesen wird, wobei ein 19-kHz-Pilotton (114) unter Verwendung des Multiplex-Signals (110) unter Verwendung einer 19-kHz-Phasenregelschleife (112) rekonstruiert wird, wobei eine 57-kHz-Schwingung (118) ansprechend auf den 19-kHz-Pilotton (114) erzeugt wird, wobei die 57-kHz-Schwingung (118) mit dem Multiplex-Signal (110) gemischt wird und in ein Basisband umgesetzt wird, um das Radio-Daten-Signal (128) bereitzustellen.

5. Verfahren (490) gemäß Anspruch 4, bei dem im Schritt (492) des Einlesens das Radio-Daten-Signal (128) vor dem Bereitstellen des Radio-Daten-Signals (128) unter Verwendung eines Tiefpassfilters (124) gefiltert und in einem Teilschritt eine Unterabtastung mit einem vorabdefinierten Abtastfaktor (n) erfolgt.

6. Vorrichtung (100) zum Aufbereiten eines Radio-Daten-Signals (128) für einen Rundfunkempfänger, die ausgebildet ist, um die Schritte eines Verfahrens (490) gemäß einem der Ansprüche 1 bis 5 in entsprechenden Einrichtungen durchzuführen.

7. Computer-Programmprodukt mit Programmcode zur Durchführung des Verfahrens (490) nach einem der Ansprüche 1 bis 5, wenn das Programmprodukt auf einer Vorrichtung (100) gemäß Anspruch 6 ausgeführt wird.

## Claims

1. Method (490) for conditioning a radio data signal (128) for a broadcast radio receiver, wherein the method (490) has the following steps:
reading in (492) the radio data signal (128) and a radio data clock signal (132);
integrating (494) a signal that is dependent on the radio data signal (128) in order to determine an integral value characteristic (504);
decoding (496) radio data signal information from the integral value characteristic (504) by using the radio data clock signal (132);
ascertaining (498) radio data signal quality information (138), representing a radio data signal quality, by using the radio data signal (128), wherein the radio data signal quality information (138) represents a creditability of the decoded radio data signal information; and
providing (500) the radio data signal information (136) and the radio data signal quality information (138) in order to provide a conditioned radio data signal (142),
**characterized in that**
the integrating step (494) involves the integral value being determined by using a multiplication of the radio data signal (128) by a sine wave of the radio data signal (386), and the integral value being determined over the duration of one period of the radio data clock signal (132) and, after one period of the radio data clock signal (132), being set to zero.

2. Method (490) according to Claim 1, in which the ascertaining step involves the radio data signal quality information representing a good quality if the integral value for the radio data signal (128) is below a predefined threshold value and wherein the radio data signal quality information (138) represents a poor quality if the integral value for the radio data signal (128) is above the predefined threshold value, wherein a good quality represents a high credibility, in particular wherein the radio data signal quality information (138) has the value zero when it represents a good quality and the radio data signal quality information (138) has the value one when it represents a poor quality.

3. Method (490) according to either of the preceding claims, in which the reading-in step (492) involves the radio data clock signal (132) being obtained by applying a Costas loop to the radio data signal (128) .

4. Method (490) according to one of the preceding claims, in which the reading-in step (492) involves a multiplex signal (110) being read in, wherein a 19-kHz pilot tone (114) is reconstructed by using the multiplex signal (110) by using a 19-kHz phase locked loop (112), wherein a 57-kHz oscillation (118) is generated in response to the 19-kHz pilot tone (114), wherein the 57-kHz oscillation (118) is mixed with the multiplex signal (110) and converted to a baseband in order to provide the radio data signal (128).

5. Method (490) according to Claim 4, in which the reading-in step (492) involves the radio data signal (128) being filtered by using a low-pass filter (124) before the radio data signal (128) is provided, and a substep involves an undersampling taking place using a predefined sampling factor (n).

6. Apparatus (100) for conditioning a radio data signal (128) for a broadcast radio receiver, which apparatus is designed to perform the steps of a method (460) according to one of Claims 1 to 5 in applicable devices.

7. Computer program product having program code for performing the method (490) according to one of Claims 1 to 5 when the program product is executed on an apparatus (100) according to Claim 6.

## Revendications

1. Procédé (490) de préparation d'un signal de données radioélectrique (128) pour un récepteur de radiocommunication, le procédé (490) comprenant les étapes suivantes :
lecture (492) du signal de données radioélectrique (128) et d'un signal d'horloge de données radioélectrique (132) ;
intégration (494) d'un signal dépendant du signal de données radioélectrique (128) afin de déterminer une courbe de valeur d'intégrale (504) ;
décodage (496) d'une information de signal de données radioélectrique à partir de la courbe de valeur intégrale (504) en utilisant le signal d'horloge de données radioélectrique (132) ;
détermination (498) d'une information de qualité de signal de données radioélectrique (138) représentant une qualité de signal de données radioélectrique en utilisant le signal de données radioélectrique (128), l'information de qualité de signal de données radioélectrique (138) représentant une crédibilité de l'information signal de données radioélectrique décodée ; et
fourniture (500) de l'information de signal de données radioélectrique (136) et de l'information de qualité de signal de données radioélectrique (138) en vue de fournir un signal de données radioélectrique préparé (142)
**caractérisé en ce que**
à l'étape d'intégration (494), la valeur intégrale est déterminée en utilisant une multiplication du signal de données radioélectrique (128) par un sinus du signal de données radioélectrique (386) et la valeur intégrale sur la durée d'une période du signal d'horloge de données radioélectrique (132) est déterminée et mise à zéro après une période du signal d'horloge de données radioélectrique (132).

2. Procédé (490) selon la revendication 1, avec lequel, à l'étape de détermination, l'information de qualité de signal de données radioélectrique représente une bonne qualité lorsque la valeur intégrale sur le signal de données radioélectrique (128) se trouve au-dessous d'une valeur de seuil prédéfinie et l'information de qualité de signal de données radioélectrique (138) représentant une mauvaise qualité lorsque la valeur intégrale sur le signal de données radioélectrique (128) se trouve au-dessus de la valeur de seuil prédéfinie, une bonne qualité représentant une crédibilité élevée, l'information de qualité de signal de données radioélectrique (138) présentant notamment la valeur zéro lorsqu'elle représente une bonne qualité et l'information de qualité de signal de données radioélectrique (138) présentant la valeur un lorsqu'elle représente une mauvaise qualité.

3. Procédé (490) selon l'une des revendications précédentes, avec lequel, à l'étape (492) de lecture, le signal d'horloge de données radioélectrique (132) est obtenu en appliquant une boucle de Costas sur le signal de données radioélectrique (128).

4. Procédé (490) selon l'une des revendications précédentes, avec lequel, à l'étape (492) de lecture, un signal multiplexé (110) est lu, une tonalité pilote de 19 kHz (114) étant reconstruite en utilisant le signal multiplexé (110) en utilisant une boucle de régulation de phase de 19 kHz (112), une oscillation de 57 kHz (118) étant générée en réaction à la tonalité pilote de 19 kHz (114), l'oscillation de 57 kHz (118) étant mélangée avec le signal multiplexé (110) et convertie en une bande de base afin de fournir le signal de données radioélectrique (128) .

5. Procédé (490) selon la revendication 4, avec lequel, à l'étape (492) de lecture, le signal de données radioélectrique (128) est filtré en utilisant un filtre passe-bas (124) avant la fourniture du signal de données radioélectrique (128), puis un sous-échantillonnage avec un facteur d'échantillonnage (n) prédéfini est effectué dans une étape partielle.

6. Arrangement (100) de préparation d'un signal de données radioélectrique (128) pour un récepteur de radiocommunication, lequel est configuré pour exécuter les étapes d'un procédé (490) selon l'une des revendications 1 à 5 dans des dispositifs correspondants.

7. Produit de programme informatique comprenant un code de programme destiné à mettre en œuvre le procédé (490) selon l'une des revendications 1 à 5 lorsque le produit de programme est exécuté sur un arrangement (100) selon la revendication 6.
